# EUROPEAN PATENT APPLICATION

(11) **EP 4 832 156 A1**
(43) Date of publication of application: **28.10.2026**
(21) Application number: 24907996.3
(22) Date of filing: 16.12.2024
(51) Int. Cl.: H01M 10/54, H01M 10/42, B09B 3/40, H01M 10/48, B09B 101/16

(54) **BATTERY STABILIZER AND BATTERY STABILIZATION SYSTEM**

(30) Priority: 18.12.2023 KR 20230185223
(71) Applicant: POSCO Holdings Inc., Pohang-si, Gyeongsangbuk-do 37859 (KR)
(72) Inventor: LEE, Juseung, Pohang-si, Gyeongsangbuk-do 37859 (KR); PARK, Chonglyuck, Pohang-si, Gyeongsangbuk-do 37859 (KR); KIM, Hak, Pohang-si, Gyeongsangbuk-do 37859 (KR); KIM, Chun, Pohang-si, Gyeongsangbuk-do 37859 (KR); SIN, Yongmok, Pohang-si, Gyeongsangbuk-do 37859 (KR)
(74) Representative: Pfenning, Meinig & Partner mbB
(86) International application number: PCT/KR2024/020450
(87) International publication number: WO 2025/135713

(57) **Abstract**

The present disclosure relates to a battery stabilization apparatus and a battery stabilization treatment system, comprising: an input unit for introducing a sagger into which shredded material from a spent battery is introduced; a conveying unit for conveying the sagger into which the shredded material from the spent battery is introduced; a first stabilization unit for performing stabilization of the shredded material from the spent battery at a temperature of 30 °C or less; a second stabilization unit for performing stabilization of the shredded material from the spent battery that has passed through the first stabilization unit at a temperature of 30 to 150 °C; and a discharge unit for discharging the stabilized shredded material from the spent battery, wherein the sagger comprises a hot air inlet for supplying heat to the shredded material from the spent battery.

## Description

### [Technical Field]

The present disclosure relates to a spent battery, and more particularly to a battery stabilization apparatus and a battery stabilization system.

### [Background Art]

As the demand for electric vehicles increases worldwide, the problem of processing spent batteries generated from the electric vehicles is emerging as a social issue. In the case of a lithium secondary battery, which is a main component of the spent battery, it contains organic solvents, explosive substances, and heavy metal substances such as Ni, Co, Mn, and Fe. However, Ni, Co, Mn, and Li have high scarcity value as valuable metals, and recovery and recycling processes after the lithium secondary battery is disposed of are emerging as an important research field.

Specifically, a lithium secondary battery comprises copper and aluminum used as current collectors, an oxide containing Li, Ni, Co, and Mn constituting a cathode active material, and graphite utilized as an anode active material as main components, and further comprises a separator separating the cathode active material and the anode active material and an electrolyte injected into the separator. A solvent and a salt constituting the electrolyte mainly consist of a mixture of carbonate organic materials, such as ethylene carbonate and propylene carbonate, and LiPF6 is used as a representative salt.

In order to utilize the spent battery, development is actively underway for a spent battery recycling process, in which the spent battery is shredded to generate an intermediate material, such as spent battery shredded material or black powder, and valuable metals are recovered through a subsequent process.

However, in the spent battery recycling process, although the spent battery may have different characteristics depending on the number of times of use or the state of the battery, the spent battery generally has a voltage in the range of 3.0 to 3.2 V in a fully discharged state per cell and a voltage close to 4 V in a fully charged state. Since a module or pack in which tens to hundreds of cells are connected possesses significant energy due to such residual voltage, safety issues related to battery explosion or electric shock may arise when the spent battery is physically decomposed by applying an external shock.

To prevent this, after the decomposition, a hole is formed in the battery and discharging is performed in salt water. The battery, after the discharging is completed, undergoes a shredding step, and high-temperature heat treatment is performed to remove water and electrolyte.

At this time, the salt used for the saltwater discharge contains a large amount of substances such as Na, K, Cl, Mg, and Ca. Among the aforementioned substances, Cl in particular is partially removed during the high-temperature heat treatment process; however, the black powder-which is a powder containing a mixture of carbon (C) and either shredded spent battery material or, alternatively, Ni-Co-Mn-Li-O oxides from which a portion of Al, Cu, and the separator has been removed by further processing the shredded material-contains impurities such as Na, K, and Mg, which causes a problem of lowering the recovery rate during the extraction process using acid leaching in a subsequent step of the battery recycling process.

In addition, research on a stabilization system is required to stably perform the removal of the electrolyte contained in the shredded material, in order to stably transfer the shredded material to the subsequent process step after the spent battery is shredded.

### [Summary of Invention]

### [Technical Problem]

According to one embodiment of the present disclosure, there is provided a battery stabilization apparatus configured to stably remove an electrolyte from a shredded spent battery material, thereby providing a product with a low impurity content and preventing a fire occurrence.

According to one embodiment of the present disclosure, there is provided a battery stabilization system configured to stably remove an electrolyte from shredded spent battery material, thereby providing a product with a low impurity content and preventing the occurrence of fire.

### [Technical Solution]

According to an embodiment of the present disclosure, a battery stabilization apparatus comprises: an input unit configured to input a sagger containing shredded material from a spent battery; a conveying unit configured to convey the sagger containing the shredded material from the spent battery; a first stabilization unit configured to stabilize the shredded material from the spent battery at a temperature of 30 °C or less; a second stabilization unit configured to stabilize the shredded material from the spent battery that has passed through the first stabilization unit at a temperature of 30 to 150 °C; and a discharge unit configured to discharge the stabilized shredded material from the spent battery, wherein the sagger may comprise a hot air inlet for supplying heat to the shredded material from the spent battery.

In one embodiment, the first stabilization unit may comprise a compressor. In one embodiment, the apparatus may comprise at least one weight and temperature measurement unit for measuring the weight of the shredded material from spent batteries.

In one embodiment, the weight and temperature measurement unit may comprise: a first weight and temperature measurement unit disposed between the inlet and the first stabilization unit; a second weight and temperature measurement unit disposed between the first stabilization unit and the second stabilization unit; and a third weight and temperature measurement unit disposed between the second stabilization unit and the discharge unit. In one embodiment, the second stabilization unit comprises an intermediate stabilization unit and a high-temperature stabilization unit, the intermediate stabilization unit may heat the shredded material from spent batteries in a range of 30 to 120 °C, and the high-temperature stabilization unit may heat the shredded material from spent batteries in a range of 120 to 150 °C.

In one embodiment, the hot air inlet may be arranged in a cylindrical, triangular prismatic, square prismatic, or polygonal prismatic shape, and may dissipate heat through an outer peripheral surface of the shape. In one embodiment, the apparatus comprises a plurality of the hot air inlets, and a spacing between the plurality of hot air inlets may be 35 to 45% based on a horizontal length of the sagger.

In one embodiment, a height of the hot air inlet may be 25 % to 50 % of a height of the sagger. In one embodiment, the height of the hot air inlet may be 25 % to 50 % of the height of the sagger.

In one embodiment, the sagger may have a structure with an open upper surface. In one embodiment, the sagger may comprise a housing surrounding a side surface of the sagger, and may comprise a mesh portion and a sealing portion disposed below the mesh portion.

According to another embodiment of the present disclosure, a battery stabilization treatment method may comprise: a first step of controlling a tap density of shredded material from spent batteries; a second step of measuring a first weight, which is an initial weight, and a first temperature, which is an initial temperature, of the shredded material from spent batteries; a third step of stabilizing the shredded material from spent batteries at a temperature of 30 °C or less; a fourth step of measuring a second weight and a second temperature of the shredded material from spent batteries having passed through the third step; a fifth step of stabilizing the shredded material from spent batteries having passed through the fourth step at a temperature of 30 to 150 °C; a sixth step of measuring a third weight and a third temperature of the shredded material from spent batteries having passed through the fifth step; and a seventh step of discharging the shredded material from spent batteries having passed through the sixth step.

In one embodiment, the first step may control a tap density of the shredded material from spent batteries to be in a range of 200 to 1,400 kg/m³. In one embodiment, the fifth step may be performed when a first weight and a first temperature of the shredded material from spent batteries measured in the second step and a second weight and a second temperature of the shredded material from spent batteries measured in the fourth step satisfy the following Equation 1 and Equation 2. <Equation 1> $Second weight - First weight \leq 25 %$ <Equation 2> $Second temperature - First temperature \leq 25 ° C$

In one embodiment, the seventh step may be performed when the second weight and the second temperature of the shredded material from spent batteries measured in the fourth step and the third weight and the third temperature of the shredded material from spent batteries measured in the sixth step satisfy the following Equation 3 and Equation 4. <Equation 3> $Third weight - Second weight \leq 10 %$ <Equation 4> $Third temperature - Second temperature \leq 25 ° C$

In one embodiment, the fifth step may be performed by multi-stage heat treatment, and the multi-stage heat treatment may be sequentially performed at temperatures of 30 to 120 °C and 120 to 150 °C. In one embodiment, before the first step of controlling the tap density of the shredded material from spent batteries, the method may comprise a step of controlling unit shreds of spent batteries constituting the shredded material from spent batteries to satisfy the following Condition 1 and Condition 2.
<Condition 1> The layered structure is a stacked structure of 1 layer or more and 7 layers or less.
<Condition 2> The size of the unit shredded spent battery material is 100 mm or less based on a major axis, which is the longest axis among horizontal, vertical, and height directions.

In one embodiment, before the first step, the method may further comprise a step of freezing the shredded material from spent batteries, and the freezing step may be carried out by cooling to a temperature ranging from -150°C to -20°C.

### [Advantageous Effects]

According to an embodiment of the present disclosure, a battery stabilization apparatus comprises a low-temperature stabilization unit and a high-temperature stabilization unit, and comprises at least one weight and temperature measurement unit configured to determine the weight and temperature of shredded material from spent batteries, thereby providing a battery stabilization apparatus that ensures a low impurity content and prevents fire occurrence.

According to another embodiment of the present disclosure, a battery stabilization system comprises a low-temperature stabilization step and a high-temperature stabilization step, and controls the weight and temperature of shredded material from spent batteries in each of the steps, thereby providing a battery stabilization system which has a low impurity content and prevents fire occurrence.

### [Brief Description of Drawings]

FIG. 1a is a perspective view of a battery stabilization apparatus according to an embodiment of the present disclosure, and FIG. 1b is a schematic diagram of a battery stabilization apparatus according to one embodiment of the present disclosure.
FIG. 2 shows a sagger according to an embodiment of the present disclosure.
FIG. 3 is a flowchart of a battery stabilization system according to onen embodiment of the present disclosure.
FIG. 4 illustrates changes in voltage of a battery according to cooling temperature, in accordance with one embodiment of the present disclosure.
FIG. 5 is a graph showing a relationship between battery weight, external cooling temperature, and cooling time according to one embodiment of the present disclosure.
FIGS. 6a and 6b are photographs of an example based on a minimum cooling time according to the present disclosure, and FIGS. 6c and 6d are photographs of a comparative example based on a minimum cooling time according to the present disclosure.
FIG. 7 is a graph illustrating the temperature of the shredded material over time, according to one embodiment of the present disclosure.
FIGS. 8a to 8c illustrate unit battery shreds according to an example and a comparative example of the present disclosure.
FIGS. 9a to 9c are photographs showing a process of measuring temperature of a spent battery and a temperature trend of shredded material according to SOC conditions.
FIG. 10a shows a temperature trend of shredded material over time, and FIG. 10b is a graph showing a temperature rise trend of shredded material according to the SOC % condition of a battery.
FIG. 11 is a graph showing the temperature of shredded material from spent batteries over time in a low-temperature stabilization step, an intermediate stabilization step, and a high-temperature stabilization step according to one embodiment of the present disclosure.
FIG. 12 is a graph showing self-heating of shredded battery material inside a transport box.
FIG. 13 shows the temperature change of the shredded material when the heating temperature is controlled for each section during the heat treatment of the high-temperature stabilization step.
FIG. 14 shows the weight loss ratio (%) of the electrolyte in the shredded material from spent batteries after high-temperature stabilization treatment, according to a heat treatment temperature of 150 °C.
FIG. 15 shows temperature and weight loss according to tap density of shredded battery material.
FIG. 16 shows a graph of heating rate according to spacing between hot air inlets.

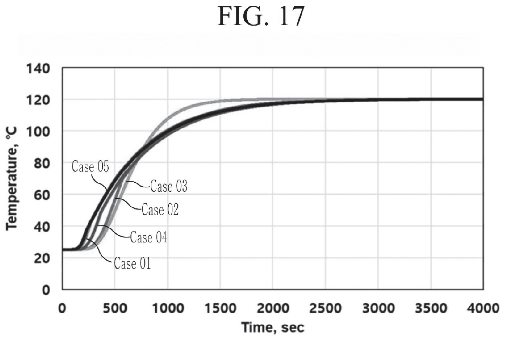

FIG. 17 shows a graph of temperature versus time according to the control of the spacing between the hot air inlets and the sealing portion spacing.

### [Detailed Description]

Terms such as first, second, and third are used to describe various parts, components, regions, layers and/or sections, but are not limited thereto. These terms are used only to distinguish one part, component, region, layer or section from another part, component, region, layer or section. Accordingly, a first part, component, region, layer or section described below may be referred to as a second part, component, region, layer or section without departing from the scope of the present invention.

Technical terminology used herein is only for referring to specific embodiments and is not intended to limit the present invention. As used herein, the singular forms include the plural forms as well, unless the phrases clearly indicate the opposite meaning. The meaning of "comprising" used in the specification specifies a specific feature, region, integer, step, operation, element and/or component, and does not exclude the presence or addition of another feature, region, integer, step, operation, element and/or component.

When a part is referred to as being "above" or "on" another part, it may be directly above or on the other part, or another part may be involved therebetween. In contrast, when a part is referred to as being "directly on" another part, no other part is interposed therebetween.

Unless otherwise defined, all terms, including technical and scientific terms, used herein have the same meaning as commonly understood by one of ordinary skill in the art to which the present invention belongs. Terms defined in a commonly used dictionary are to be interpreted as having a meaning consistent with the related technical literature and the currently disclosed content, and shall not be interpreted in an ideal or overly formal sense unless explicitly defined otherwise.

Hereinafter, embodiments of the present invention will be described in detail. However, these are presented as examples, and the present invention is not limited thereby, and the present invention is only defined by the scope of the claims to be described later.

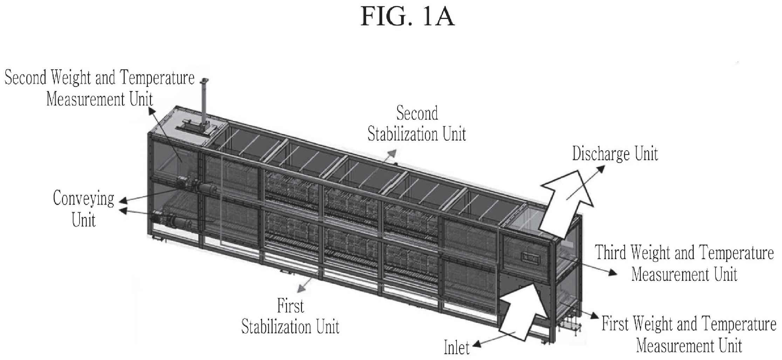

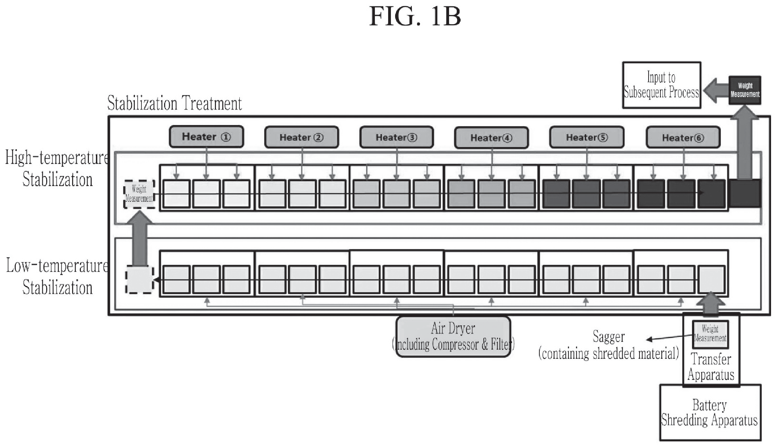

FIG. 1a is a perspective view of a battery stabilizer according to an embodiment of the present invention, and FIG. 1b is a schematic diagram of a battery stabilizer according to an embodiment of the present invention.

Referring to FIGS. 1a and 1b, a battery stabilizer according to an embodiment is a device for stabilizing shredded material from spent batteries, and may comprise an input unit, a conveying unit, a first stabilization unit, a second stabilization unit, a weight and temperature measurement unit, and a discharge unit.

The input unit may be a member into which shredded material from spent batteries is introduced. The shredded material from spent batteries may be a result of shredding the spent battery. By introducing a sagger containing the shredded material from spent batteries through the input unit, the shredded material may be introduced into the battery stabilization apparatus.

The conveying unit may be a member configured to convey the sagger into which the shredded material from spent batteries is introduced within the battery stabilization apparatus. The conveying unit may be a member configured to guide the sagger containing the shredded material from spent batteries to be discharged to the discharge unit via the first stabilization unit and the second stabilization unit. The conveying unit may be, for example, a conveyor belt.

The first stabilization unit may perform stabilization of the shredded material from spent batteries at a low temperature. Specifically, the first stabilization unit may perform stabilization of the shredded material from spent batteries while the shredded material from spent batteries is conveyed while being received in the sagger and by applying hot air to the sagger.

In one embodiment, the first stabilization unit may comprise a first heater unit at a lower portion. The first heater unit may supply heat to a lower portion of the sagger. Specifically, the first heater unit may supply hot air to the sagger to apply heat to the shredded material from spent batteries disposed in the sagger.

Specifically, the first stabilization unit may stabilize the shredded material from spent batteries at a temperature of 30 °C or less. More specifically, the first stabilization unit may be a member configured to stabilize the shredded material from spent batteries while the shredded material undergoes self-heating. The first stabilization unit may prevent a problem where sudden heating occurs and a fire occurs when an SoC (State of Charge), which represents a residual capacity of the shredded material from spent batteries, is 30 % or more.

In one embodiment, the first stabilization unit may comprise a high-temperature air dryer for supplying air with minimized moisture. Specifically, the first stabilization unit may be a member configured to supply dry air, from which moisture has been removed, while maintaining a temperature of 5 to 20 °C, specifically 5 to 15 °C. Specifically, the heater unit may be a device configured to produce dry air.

In one embodiment, the first stabilization unit may comprise a compressor. The compressor may be a screw compressor for forming dry air. In one embodiment, the compressor may form a pressure of 10 bar or less.

In one embodiment, the first stabilization unit may further comprise a first vibration unit. Specifically, the first vibration unit may control the shredded battery material to be uniformly heated by vibrating and dispersing the shredded battery material when the first stabilization unit applies hot air to the shredded battery material.

The second stabilization unit may perform stabilization of the shredded material from spent batteries at a high temperature. Specifically, the second stabilization unit may perform stabilization of the shredded material from spent batteries by conveying the shredded material from spent batteries while it is received in the sagger and by applying hot air to the sagger to volatilize high-temperature volatile electrolyte that was not volatilized in the first stabilization unit.

In one embodiment, the second stabilization unit may comprise a second heater unit at a lower portion. The second heater unit may supply heat to a lower portion of the sagger. Specifically, the second heater unit may supply hot air to the sagger to apply heat to the shredded material from spent batteries disposed in the sagger.

More specifically, the second stabilization unit may be a member configured to stabilize the shredded material from spent batteries at a temperature of 30 to 150 °C. The second stabilization unit may volatilize the electrolyte in the shredded material from spent batteries by heating the shredded material from spent batteries in the aforementioned temperature range, thereby reducing the weight of the shredded material from spent batteries, and the tap density may be reduced.

In one embodiment, the second stabilization unit may comprise an intermediate stabilization unit and a high-temperature stabilization unit. The intermediate stabilization unit may be configured to heat the shredded material from spent batteries at a lower temperature than the high-temperature stabilization unit. In one embodiment, the intermediate stabilization unit may be a member configured to stabilize the shredded material from spent batteries at a temperature of 30 to 120 °C. By the second stabilization unit comprising the intermediate stabilization unit, the temperature of the shredded material from spent batteries may be gradually increased to stably volatilize the electrolyte in the shredded material from spent batteries.

In one embodiment, the high-temperature stabilization unit may be a member that performs stabilization of the shredded material from spent batteries at a temperature of 120 to 150 °C. As the high-temperature stabilization is performed within the aforementioned range, residual electrolyte may be volatilized by applying high-temperature heat to the shredded material from spent batteries that has been stabilized through the low-temperature stabilization treatment step.

In one embodiment, the second stabilization unit may further comprise a second vibration unit. Specifically, the second vibration unit may be configured to control the shredded battery material to be uniformly heated by vibrating and dispersing the shredded battery material when the second stabilization unit applies hot air to the shredded battery material.

In one embodiment, the first stabilization unit and the second stabilization unit may be arranged in a horizontal or stacked structure. Specifically, the second stabilization unit may be stacked on the first stabilization unit, or may be arranged following the first stabilization unit on the same line.

In one embodiment, the first stabilization unit and the second stabilization unit may apply heat to the shredded battery material disposed in the sagger while the sagger moves. The weight and temperature measurement unit may be a member for measuring the weight and temperature of the shredded material from spent batteries. Specifically, the weight and temperature measurement unit may measure the weight and temperature of the shredded material from spent batteries using a device selected from the group consisting of a load cell, a TC, and a thermal imaging camera.

In one embodiment, the battery stabilizer may comprise a weight and temperature measurement unit. The weight and temperature measurement unit may comprise a first weight and temperature measurement unit disposed between the inlet and the first stabilization unit, a second weight and temperature measurement unit disposed between the first stabilization unit and the second stabilization unit, and a third weight and temperature measurement unit disposed between the second stabilization unit and the discharge unit.

The first weight and temperature measurement unit may measure an initial weight and a tap density of the shredded material from spent batteries. Specifically, the first weight and temperature measurement unit may be a member configured to measure the initial weight and a temperature of the shredded material from spent batteries to determine whether the subsequent stabilization treatment is acceptable.

The first weight and temperature measurement unit may be configured to determine whether the temperature of the shredded material from the spent battery is in the range of -20 to 10 °C and whether the weight of the shredded material from the spent battery is at a level similar to the weight of the spent battery before shredding. For example, it may be configured to determine whether the weight of the shredded material from the spent battery is in the range of 31.75 to 32.25 kg.

When the temperature and weight of the shredded material of the spent battery fall within the aforementioned ranges, the shredded material of the spent battery may move to a first stabilization unit along a transfer unit. When the temperature and weight of the shredded material of the spent battery are outside the aforementioned ranges, movement to the first stabilization unit may be prevented, in consideration of a problem such as the occurrence of fire in the shredded material of the spent battery, particularly when a temperature decrease is significant due to initial heat generation after shredding.

The second weight and temperature measurement unit may be a member for measuring the temperature and weight of the shredded spent battery material that has passed through the first stabilization unit. Specifically, the second weight and temperature measurement unit may be a member for determining whether the temperature of the shredded spent battery material that has passed through the first stabilization unit is in the range of 10 to 35 °C and whether the weight of the shredded spent battery material is in the range of 30.65 to 31.15 kg. When the temperature and weight of the shredded spent battery material fall within the aforementioned ranges, the shredded spent battery material may move to the second stabilization unit along the transfer unit. When the temperature and weight of the shredded spent battery material are outside the aforementioned ranges, movement to the second stabilization unit may be prevented to avoid problems such as fire occurrence in the shredded spent battery material.

The third weight and temperature measurement unit may be a member configured to measure the temperature and weight of the shredded material from spent batteries that has passed through the second stabilization unit. Specifically, the third weight and temperature measurement unit may be a member configured to determine whether the temperature of the shredded material from spent batteries that has passed through the second stabilization unit is 100 °C or less and whether the weight of the shredded material from spent batteries is 29.85 kg or less. When the temperature and weight of the shredded material from spent batteries are within the aforementioned ranges, the shredded material from spent batteries may be discharged through the discharge unit. When the temperature and weight of the shredded material from spent batteries are outside the aforementioned ranges, discharge through the discharge unit may be prevented to avoid issues such as the risk of fire in the shredded material from spent batteries.

The discharge unit may be a member through which the shredded material from spent batteries having passed through the second stabilization unit is discharged to a subsequent process. Specifically, the discharge unit may be a member through which the stabilized shredded material from spent batteries is discharged to the subsequent process. More specifically, the discharge unit may discharge the shredded battery material to a subsequent process and return the receiving unit, which receives the shredded battery material discharged by the discharge unit, to the shredding apparatus.

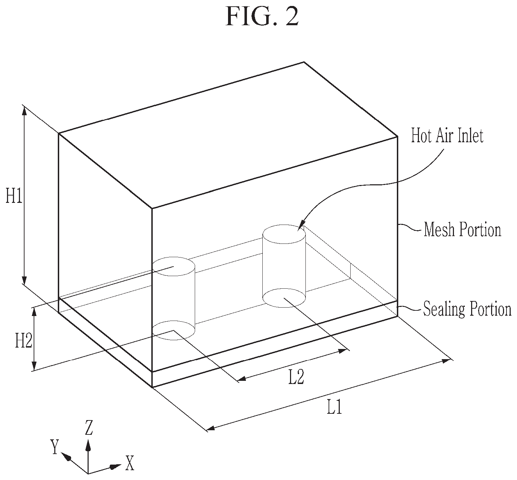

FIG. 2 shows a sagger according to one embodiment of the present disclosure.

FIG. 2 shows a perspective view of a sagger according to one embodiment of the present disclosure. In one embodiment, the sagger may comprise at least one hot air inlet for supplying heat to the shredded material from spent batteries from a heater unit disposed below a first stabilization unit and a second stabilization unit, and a housing for protecting the sagger. Specifically, by including at least one hot air inlet in the sagger, when heat is supplied from heaters disposed in the first stabilization unit and the second stabilization unit, the heat may be introduced into the sagger to supply heat to the shredded battery material. The shredded battery material may be stabilized through the heat supplied through the hot air inlet.

In one embodiment, the hot air inlet may be disposed in at least a partial region of the sagger. Specifically, the hot air inlet may facilitate the supply of hot air into the sagger. In one embodiment, the heater unit may be disposed at a side portion of the sagger to supply heat starting from an edge region of the shredded spent battery material.

In one embodiment, the hot air inlet may be arranged in a cylindrical, triangular prismatic, square prismatic, or polygonal prismatic shape. The hot air inlet may dissipate heat through an outer peripheral surface of the aforementioned shape. The hot air inlet may have the aforementioned shape and may comprise a mesh structure. The mesh structure may be in the form of a net, and may assist the heat input from the hot air inlet to be easily dissipated.

By supplying heat to the shredded material from spent batteries from the hot air inlet, the electrolyte in the shredded material from spent batteries may be volatilized to stabilize the shredded material from spent batteries. As such, by supplying hot air to the shredded material from spent batteries, the shredded material from spent batteries may be stabilized by a dry method.

In one embodiment, the hot air inlet may comprise a plurality of inlets. A plurality of the hot air inlets are arranged in the sagger to uniformly supply heat to an entire area in the sagger where the shredded material from spent batteries is disposed.

In one embodiment, a spacing L2 between the hot air inlets may be 35 to 45 % of a horizontal length L1 of the sagger. Specifically, the spacing between central regions of the hot air inlets may be 35 to 45 % of the length of a major axis when the sagger is cut in a cross section along X-axis and Y-axis planes, which are horizontal planes with respect to the sagger.

Since the spacing between the plurality of hot air inlets satisfies the aforementioned range, a heating rate within the sagger may be increased, which provides an advantage in that heat may be uniformly supplied to the shredded battery material. Conversely, if the spacing between the plurality of hot air inlets is outside the aforementioned range, the heating rate within the sagger may not be sufficiently high, which presents a problem in that heat may not be uniformly supplied to the shredded battery material.

In one embodiment, a height H2 of the hot air inlet may be 25 % to 50 % of a height H1 of the sagger. Specifically, it may be 30 % to 40 % of the height H1. As the height H2 of the hot air inlet satisfies the aforementioned range based on the height H1 of the sagger, there is an advantage that the shredded battery material disposed in the sagger may be uniformly heated.

If the height H2 of the hot air inlet exceeds an upper limit of the aforementioned range, the amount of the shredded battery material disposed in the sagger may decrease, which results in reduced efficiency and a problem in that an excessive amount of hot air may be supplied to the shredded battery material. If the height H2 of the hot air inlet is less than a lower limit of the aforementioned range, there is a problem that heat may not be properly supplied to the shredded battery material.

In one embodiment, a cross-sectional shape along a vertical plane of the hot air inlet may be at least one selected from the group consisting of a triangle, a rectangle, a circle, an ellipse, and a polygon. Specifically, the cross-sectional shape of the hot air inlet refers to a shape obtained when a cross section is taken along X-axis and Z-axis planes, which are vertical planes of the sagger. As the cross-sectional shape along the vertical plane of the hot air inlet may have various shapes, heat may be efficiently supplied to shredded battery material having various shapes.

In one embodiment, the sagger may have an opening shape on an upper surface. Specifically, the sagger may have a structure in which the upper surface is not sealed but open. As the sagger has a structure in which the upper surface is open, heat generated from the shredded battery material may be discharged through the open structure.

In one embodiment, the housing of the sagger may comprise a mesh portion in at least a partial region. Specifically, the mesh portion has a net shape, and heat generated from the shredded battery material may be easily discharged. More specifically, at least one of four surfaces surrounding a side of the sagger may comprise a mesh portion.

In one embodiment, the housing of the sagger may comprise a sealing portion in at least a partial region. Specifically, the sealing portion may be disposed below the mesh portion and may maintain the efficiency of heat introduced from the hot air inlet.

In one embodiment, based on 100 % of the height of the sagger, the ratio of the sealing portion may be 30 to 80 %, specifically 35 to 70 %, and more specifically 60 to 70 %. As the ratio of the sealing portion satisfies the aforementioned range, a time to reach a target temperature of the first stabilization unit or the second stabilization unit may be minimized. When the ratio of the sealing portion is outside the upper limit value of the aforementioned range, heat discharged from the shredded battery material is not easily discharged to the outside, which may cause a load inside the device. When the ratio of the sealing portion is outside the lower limit value of the aforementioned range, there is a problem of reducing the efficiency of the process by increasing the time to reach the target temperature.

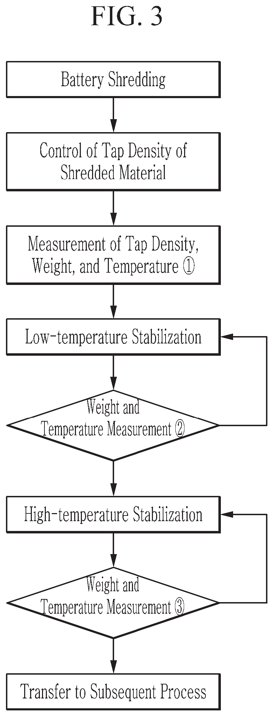

Referring to FIG. 3, a method of battery stabilization according to one embodiment comprises: a first step of controlling a tap density of shredded material from spent batteries; a second step of measuring a first weight, which is an initial weight, and a first temperature, which is an initial temperature, of the shredded material from spent batteries; a third step of stabilizing the shredded material from spent batteries at a temperature of 30 °C or less; a fourth step of measuring a second weight and a second temperature of the shredded material from spent batteries having passed through the third step; a fifth step of stabilizing the shredded material from spent batteries having passed through the fourth step at a temperature of 30 to 120 °C; a sixth step of measuring a third weight and a third temperature of the shredded material from spent batteries having passed through the fifth step; and a seventh step of discharging the shredded material from spent batteries having passed through the sixth step.

The first step of controlling the tap density of the shredded material from spent batteries may be a step of controlling the tap density of the shredded material from spent batteries to 200 to 1,400 kg/m³. Specifically, it may be a step of controlling the tap density of the shredded material from spent batteries to 500 to 1,000 kg/m³.

The tap density typically refers to an apparent density obtained by mechanically tapping a measuring container containing a powder sample. Specifically, to identify the tap density characteristics of the shredded material from spent lithium-ion batteries, a commercialized battery module consisting of about 30 cells with a total weight of 30 kg was shredded by a shredding apparatus. The resulting shredded material was placed in a case (volume: 0.4 m in width × 0.7 m in length × 0.44 m in height) designed for stabilization, and the container was mechanically tapped to measure the apparent density. More specifically, the density (ρ = M/V) was calculated by dividing the battery weight (M, kg) by the case volume (V, m3). The tap density of the unit shreds of spent batteries calculated by the aforementioned method is 200 to 600 kg/m³. Specifically, the tap density may be 240 to 400 kg/m³.

When the tap density is outside the upper limit value, there is a risk of fire occurring due to the instantaneous generation of heat caused by the disconnection of the shredded materials where pieces of shredded material are densely stacked, and there is a problem in that the space through which the electrolyte may escape to the outside becomes narrow, thereby reducing stabilization throughput. When the tap density is outside the lower limit value, many gaps are created in the space between the shredded materials, and the materials occupy a large volume, so there is a problem in that an additional pressing process is required for transporting the materials to a subsequent process.

In one embodiment, before the first step of controlling the tap density of the shredded material from spent batteries, the method may comprise a step of controlling unit shreds of spent batteries constituting the shredded material from spent batteries to satisfy the following Condition 1 and Condition 2.
<Condition 1> The layered structure is a stacked structure of 1 layer or more and 7 layers or less.
<Condition 2> The size of the unit shreds of spent batteries is 100 mm or less based on a major axis, which is the longest axis among a horizontal direction, a vertical direction, and a height direction.

The unit shreds of a spent battery are for recovering valuable metals from spent batteries and have a layered structure comprising a separator, wherein a cathode or an anode is stacked on at least one side of the separator. Specifically, the layered structure may comprise a configuration in which a cathode or an anode is included on one surface or both surfaces of the separator. More specifically, the number of layers of the layered structure may correspond to the number of separators.

The layered structure comprises any one of, for example, a cathode-separator-anode, a cathode-separator, a separator-cathode, a separator-anode, or an anode-separator, and for example, a cathode-separator-anode-separator-cathode-separator-anode may have a 3-layer layered structure. Specifically, the unit shreds of spent batteries may have a predetermined thickness in a thickness direction as at least one layer is stacked.

Condition 1 may mean that the layered structure of the unit shreds of spent batteries, which comprise a separator having a cathode or an anode stacked on at least one side thereof, is controlled in a shredding step to have a stacked structure of 1 to 7 layers.

In one embodiment, the layered structure may be a stacked structure of 1 to 7 layers. Specifically, the layered structure may be a stacked structure of 1 to 5 layers. As the layered structure is stacked within the aforementioned range, a temperature rise of the shredded material may be minimized, and a temperature rise time may be appropriately managed. When the layered structure is stacked thicker than the upper limit value of the aforementioned range, the temperature rise excessively increases, and the temperature rise time also increases, resulting in a combustion problem.

In one embodiment, the size of the unit shreds of spent batteries, specifically, may be controlled in the shredding step to be 100 mm or less, specifically 50 mm or less, based on a major axis which is the longest axis among horizontal, vertical, and height directions. When the maximum size of the shredded material from the spent batteries is larger than 100 mm, a self-heating temperature occurring due to instability as the shredded material from the spent batteries is shredded rises to a temperature range of 120 °C, which is an average vaporization temperature of the electrolyte, so that stability problems such as fire occurrence may occur.

In one embodiment, in order to satisfy condition 1 and condition 2, the method may comprise a step of shredding spent batteries. Specifically, the method may further comprise a step of controlling a ratio of unit shreds of spent batteries satisfying condition 1 and condition 2 to be 90% or more, specifically 95% or more, based on the total volume of the shredded material from spent batteries. Specifically, this may correspond to controlling a ratio of unit shreds of spent batteries having a stacked structure of more than 7 layers to be 10% or less based on the total volume of the shredded material from spent batteries. Specifically, the ratio of unit shreds of spent batteries having a stacked structure of more than 7 layers may be controlled to be 5% or less based on the total volume of the shredded material from spent batteries. By satisfying the aforementioned range, there is an advantage in that fire occurrence may be prevented.

The step of shredding spent batteries may refer to a process of applying an impact or pressure to the battery so that a part of the battery is detached from the battery. In one embodiment, the step of shredding spent batteries may refer to any process selected from the group consisting of crushing the battery, cutting the battery, compressing the battery, and a combination thereof. Specifically, the shredding step may comprise any process by which the battery may be broken to obtain shreds of a small size.

In one embodiment, the step of shredding the battery may include any process of compressing a frozen battery or breaking the battery by applying an external force such as shear force or tensile force. The step of shredding the battery may be carried out using, for example, a shredding apparatus.

In one embodiment, the step of shredding the battery may be performed at least once. Specifically, the shredding step may be performed continuously or discontinuously at least once.

In one embodiment, the step of shredding the battery may be carried out under conditions of supplying an inert gas, carbon dioxide, nitrogen, water, or a combination thereof, or under a vacuum atmosphere condition of 100 torr or less. For example, when the step of freezing the battery is carried out by cooling in a temperature range of -60 to -20 °C, if carried out under the aforementioned conditions, oxygen supply may be suppressed, so that the electrolyte may be prevented from reacting with oxygen, explosion caused by this may be prevented, and vaporization of the electrolyte may be suppressed, so that flammable gas such as ethylene, propylene, or hydrogen may not be generated.

In one embodiment, a recovery time required to drop the shredded material from spent batteries to a range of 20 to 50 °C in the shredding step may be 200 minutes or less. Specifically, the recovery time required to drop the shredded material from spent batteries to a range of 35 to 45 °C may be 200 minutes or less.

The second step of measuring a first weight as an initial weight and a first temperature as an initial temperature of the shredded material from spent batteries may be a step of measuring the initial weight and the initial temperature of the shredded material from spent batteries. In the second step, the initial weight of the shredded material from spent batteries may be controlled to be within a range of 30.65 to 31.15 kg. In the second step, the initial temperature of the shredded material from spent batteries may be controlled to be within a range of 10 to 35 °C.

In one embodiment, a surface of the unit shreds of spent batteries may comprise a combusted portion and a normal portion. The combusted portion refers to a region where at least a part of the surface of the unit shreds of spent batteries is combusted, and the normal portion refers to a portion where there are no combustion traces on the surface.

In one embodiment, on the surface of the unit shreds of spent batteries, an area ratio of the combusted portion to the normal portion may satisfy 30 % or less. As the area ratio of the combusted portion to the normal portion satisfies 30 % or less, a possibility of fire occurrence due to combustion of the unit shreds of spent batteries may be prevented. When the area ratio of the combusted portion to the normal portion exceeds 30 %, there is a risk that the unit shreds of spent batteries combust and cause a fire accompanied by smoke.

In one embodiment, on the surface of the unit shreds of spent batteries, the combusted portion may be disposed at an edge of the surface. The normal portion may be disposed near a center of the surface of the unit shreds of spent batteries. The combusted portion means a region showing a darker color compared to the normal portion.

The shredded material from spent batteries may comprise at least one of the aforementioned unit shreds of spent batteries. In one embodiment, the content of the at least one unit shred of spent batteries may be 90% or more based on the total volume of the shredded material from spent batteries. Specifically, the content of the unit shreds of spent batteries may be 95% or more based on the total volume of the shredded material from spent batteries.

Specifically, the shredded material from spent batteries may correspond to the content that the ratio of unit shredded pieces of spent batteries having a stacked structure of more than 7 layers is 10 % or less, specifically 5 % or less, of the total volume of the shredded material from spent batteries, or the ratio of at least one unit shredded piece of spent batteries having a size of more than 100 mm based on the major axis is 10 % or less, specifically 5 % or less, of the total volume of the shredded material from spent batteries.

As such, in the total volume of the shredded material from spent batteries, the ratio of the shredded material from spent batteries having a layered structure of more than 7 layers per unit volume or the ratio of the unit shreds of spent batteries having a size of more than 100 mm based on the major axis satisfies the aforementioned range, so that fire occurrence may be prevented.

In one embodiment, the shredded material from spent batteries is recovered from spent batteries and comprises impurities, and the impurities may comprise, in weight %, Na, Ca, Mg, and K. The shredded material from spent batteries may be shredding residue or black powder produced through a process of recovering and shredding spent batteries, which is a pretreatment process of the spent battery recycling process.

The shredded material from spent batteries may comprise impurities such as Na, Ca, Mg, and K. The shredded material from spent batteries may facilitate extraction of Li, which is a congeneric valuable metal, in a subsequent process by lowering the content of the impurities.

According to one embodiment of the present disclosure, shredded material from spent batteries comprises impurities, and the impurities may comprise, in weight %, Na: 0.4 % or less (excluding 0 %), Ca: 0.03 % or less (excluding 0 %), Mg: 0.02 % or less, and K: 0.02 % or less.

Hereinafter, the reasons for limiting the content of the impurities will be described.

### Na: 0.4 weight % or less (excluding 0 %)

Sodium (Na) is a congeneric element in a subsequent process for recovering valuable metals from the shredded material from spent batteries. Sodium partially reacts instead of lithium in a lithium hydroxide formation process to form sodium hydroxide, thereby lowering the recovery of lithium or causing side effects of increasing costs in a causticization process. The shredded material from spent batteries may comprise sodium in an amount of 0.4 weight % or less, and specifically, the shredded material from spent batteries may comprise sodium in an amount of 0.1 weight % or less.

When the sodium is contained in an amount larger than the aforementioned range, an increase in Na causes a decrease in the actual yield during the process of producing lithium carbonate, as Na is a group 1 element identical to Li, which interferes with the crystallization of Li dissolved in the solvent after the leaching process and the solvent extraction process.

### Ca: 0.03 weight % or less (excluding 0 %)

Calcium (Ca), like sodium, is an element that lowers the recovery rate of valuable metals in a subsequent process for recovering valuable metals from the shredded material of spent batteries. Calcium has better reactivity than aluminum when forming lithium aluminate and forms a lithium-calcium-aluminate (lithium-Ca-aluminate) structure, thereby hindering the formation of lithium aluminate, which is advantageous for subsequent reactions, and lowering the final lithium recovery rate. The shredded material from spent batteries may comprise the calcium in an amount of 0.03 wt% or less, and specifically, the calcium may be present in an amount of 0.02 wt% or less.

When the calcium is contained in an amount larger than the aforementioned range, an increase in Ca causes problems such as increased loss rate and process time in a solid-liquid separation process, which is an impurity purification process performed after the leaching process. In addition, when the content of the calcium is excessively high, when nickel, cobalt, and manganese hydroxides and lithium hydroxide in a precursor state are synthesized to produce a cathode active material, the product is synthesized as Li[NiCoMn]₁₋ₓ CaₓO₂, so that the calcium constitutes the cathode active material oxide structure, thereby hindering the movement of lithium ions, resulting in a problem of reduced battery capacity.

### Mg: 0.02 weight % or less

Magnesium (Mg) is an element that makes it difficult to separate a solid phase and a liquid phase during leaching by an acid in a valuable metal recovery process. The shredded material from spent batteries may comprise the magnesium in an amount of 0.02 weight % or less, specifically, 0.01 weight % or less.

When the magnesium is contained in an amount larger than the aforementioned range, there is a problem of imposing a load on the recovery process of nickel, cobalt, lithium, and the like. In addition, when the content of magnesium is excessively high, upon synthesizing the magnesium with nickel, cobalt, and manganese hydroxides and lithium hydroxide in a precursor state to produce a cathode active material, the magnesium is synthesized as Li[NiCoMn]₁₋ₓMgₓO₂, which forms a cathode active material oxide structure that hinders the movement of lithium ions, resulting in a problem of reducing battery capacity.

### K: 0.02 weight % or less

Potassium (K) is also a congeneric element with lithium and acts to hinder the behavior of lithium in producing a hydroxide. The shredded material from spent batteries may include the potassium in an amount of 0.02 weight % or less, specifically, 0.01 weight % or less. When the potassium is contained in an amount larger than the aforementioned range, there arises a problem of lowering the recovery rate of lithium by causing a load in the causticization process.

In one embodiment, before the first step, the method may comprise a step of freezing spent batteries. Specifically, the step of freezing spent batteries may satisfy the following Equation 1. <Equation 1> $minimum cooling time \left(Hr\right) = A \times \left({W}^{0.33}\right)$ (A = 4 × e ^{(-0.02×dT)}, W = battery weight (Kg), dT = |external cooling temperature - target temperature|, where || denotes an absolute value)

W in Equation 1 represents the weight of the battery, for example, the weight of a battery pack, a single battery, or a combination thereof. The minimum cooling time corresponds to an external cooling temperature, which is a cooling temperature applied to the battery, and represents, for example, a target temperature for cooling the electrolyte within the battery.

The step of freezing spent batteries is performed for at least the minimum cooling time, such that the electrolyte inside the battery is also cooled, which has the advantage that subsequent processes may be performed stably. The step of freezing spent batteries has a problem that when batteries are frozen for a time less than the minimum cooling time, the electrolyte is not cooled, such that a risk of fire may occur during shredding.

The step of freezing spent batteries is performed at a temperature sufficient for the electrolyte contained in the battery to be frozen. Specifically, the freezing step may be performed, for example, in a temperature range of -150 to -20 °C. More specifically, the temperature range may be from -150 to -50 °C, and even more specifically, from -80 to -60 °C.

When the spent battery is frozen in the aforementioned temperature range, voltage remaining finely inside the battery, for example, a voltage of about 2 V to 3 V, decreases to near 0 V, and accordingly, even if a short circuit occurs in which the cathode and the anode directly contact, a cell reaction does not occur, so that the battery temperature does not increase, and gas generation and combustion of the electrolyte do not occur. In addition, since the electrolyte is in a frozen state or a state in which vaporization generation is suppressed, the lithium ion mobility is very low, so that energization characteristics according to the lithium ion movement may be significantly reduced, and since vaporization of the electrolyte does not occur, flammable gases such as ethylene, propylene, and hydrogen may not be generated.

When the freezing step is outside the aforementioned temperature range, for example, when cooling to a temperature higher than -60 °C, the voltage remaining inside the battery does not decrease to 0 V; consequently, a cell reaction due to a short circuit may occur, and the electrolyte is not completely frozen, which is inappropriate. In addition, when cooling to - 150 °C, the electrolyte is sufficiently frozen and the internal voltage of the battery also decreases to 0 V; therefore, it is not necessary to decrease to a temperature lower than this. As such, the battery treatment method comprises the step of freezing the battery before shredding the battery, such as a lithium secondary battery, which has the advantage that the risk of fire that may occur in the battery shredding process may be prevented.

When the initial temperature and initial weight of the shredded material of spent batteries are within the aforementioned ranges, the shredded material of spent batteries may move to the first stabilization unit along the transfer unit. When the temperature and weight of the shredded material of spent batteries are outside the aforementioned ranges, movement to the first stabilization unit may be prevented in consideration of problems such as fire occurrence in the shredded material of spent batteries.

The low-temperature stabilization treatment step may be a step of stabilizing the shredded spent battery material at a temperature of 30 °C or less. The third step of stabilizing the shredded spent battery material at a temperature of 30 °C or less may convey the shredded spent battery material while slowly transferring it in a low-temperature state and removing the electrolyte.

Specifically, the low-temperature stabilization treatment step may be a step in which the shredded spent battery material is stabilized while self-heating. More specifically, the self-heating of the shredded material differs depending on the condition of the SoC (State of Charge), which represents the residual capacity of the battery.

More specifically, when the SoC is 30 % or more, sudden heating occurs and a fire may occur. Therefore, the low-temperature stabilization treatment step may be a preliminary step of stabilizing the battery at a temperature of 10 °C or less to minimize the aforementioned fire hazard.

In one embodiment, the third step, which is a low-temperature stabilization step, may be performed for 6 to 24 hours. When the duration of the low-temperature stabilization treatment step exceeds the upper limit value of the aforementioned time range, the fire hazard is minimized, but the manufacturing lead time becomes longer, resulting in a reduction in productivity. When the duration of the low-temperature stabilization treatment step is below the lower limit value of the aforementioned time range, the electrolyte may not be removed sufficiently safely, which poses a risk of fire in a subsequent process.

The fourth step of measuring a second weight and a second temperature of the shredded material from spent batteries having passed through the third step is a step of measuring a weight and a temperature of the shredded material from spent batteries having undergone the low-temperature stabilization step. The third step may be a step of determining whether the shredded material from spent batteries having undergone the low-temperature stabilization is suitable for performing high-temperature stabilization.

In one embodiment, when the first weight and the first temperature of the shredded material from spent batteries measured in the second step and the second weight and the second temperature of the shredded material from spent batteries measured in the fourth step satisfy the following Equation 1 and Equation 2, the fifth step, which is the high-temperature stabilization step, may be performed. <Equation 1> $Second weight - First weight \leq 25 %$ <Equation 2> $Second temperature - First temperature \leq 25 ° C$

Equations 1 and 2 refer to a weight loss ratio (%) and a temperature difference between the shredded material from spent batteries having undergone low-temperature stabilization and the initial shredded material from spent batteries. Specifically, Equation 1 represents the weight loss ratio after the low-temperature stabilization treatment, and Equation 2 represents the temperature difference before and after performing the low-temperature stabilization.

When Equation 1 and Equation 2 are satisfied, the shredded material from spent batteries has the advantage that fire does not occur even if the high-temperature stabilization step is performed, and the electrolyte may be smoothly volatilized. When Equation 1 and Equation 2 are not satisfied, the shredded material from spent batteries having undergone the low-temperature stabilization step may be unable to perform the high-temperature stabilization step, which is a subsequent process, and may continue the fourth step, which is the low-temperature stabilization step, until the conditions of Equation 1 and Equation 2 are satisfied.

The fifth step, in which the shredded material from spent batteries having passed through the fourth step is stabilized at a temperature of 30 to 150 °C, may be a high-temperature stabilization step performed at a higher temperature than the low-temperature stabilization step. Specifically, the high-temperature stabilization step may be a step of volatilizing the electrolyte in the shredded material from spent batteries by applying high-temperature heat to the shredded material from spent batteries that has been stabilized through the low-temperature stabilization step.

In one embodiment, the fifth step may be performed by a multi-stage heat treatment. Specifically, the fifth step may include an intermediate stabilization step and a high-temperature stabilization step. The multi-stage heat treatment may be sequentially performed at temperatures of 30 to 120 °C and 120 to 150 °C.

In one embodiment, the intermediate stabilization step may be performed at a temperature higher than the low-temperature stabilization treatment step and lower than the high-temperature stabilization treatment step. In one embodiment, the intermediate stabilization treatment step may be performed at 30 to 120 °C. In one embodiment, the intermediate stabilization treatment step may be performed by multi-stage heat treatment. The intermediate stabilization treatment step may be sequentially performed at 30 to 60 °C, 60 to 90 °C, and 90 to 120 °C.

As such, by performing the intermediate stabilization treatment step before the high-temperature stabilization treatment step, the temperature of the shredded material from spent batteries may be gradually increased to stably volatilize the electrolyte in the shredded material from spent batteries.

In one embodiment, the high-temperature stabilization step may be performed at 120 to 150 °C. Specifically, the high-temperature stabilization step may be a step of volatilizing the electrolyte in the shredded material from spent batteries by applying high-temperature heat to the shredded material from spent batteries stabilized through the low-temperature stabilization step.

If the high-temperature stabilization step is performed outside the upper limit of the aforementioned temperature range, a fire may occur. If the high-temperature stabilization step is performed outside the lower limit of the aforementioned temperature range, the electrolyte in the shredded waste battery material may not be sufficiently volatilized.

In one embodiment, the high-temperature stabilization step may be performed for 5 hours to 12 hours. When the high-temperature stabilization step is outside the upper limit value of the aforementioned time range, there is a problem in productivity due to an increase in manufacturing lead time. When the high-temperature stabilization step is outside the lower limit value of the aforementioned time range, there is a problem that the electrolyte is not sufficiently removed, which may cause fire in the subsequent process.

The sixth step of measuring the third weight and the third temperature of the shredded material from spent batteries having passed through the fifth step is a step of measuring the weight and temperature of the shredded material from spent batteries having undergone the high-temperature stabilization step. Specifically, the sixth step may be a step of determining whether the shredded material from spent batteries having undergone the high-temperature stabilization step is suitable for performing a subsequent process.

In one embodiment, the seventh step may be performed when the second weight and the second temperature of the shredded material from spent batteries measured in the fourth step and the third weight and the third temperature of the shredded material from spent batteries measured in the sixth step satisfy the following Equation 3 and Equation 4. <Equation 3> $Third weight - Second weight \leq 10 %$ <Equation 4> $Third temperature - Second temperature \leq 25 ° C$

Equations 3 and 4 represent the weight loss ratio (%) and the temperature difference between the shredded material from spent batteries having undergone high-temperature stabilization and the shredded material from spent batteries before the high-temperature stabilization step. When Equation 3 and Equation 4 are satisfied, there is an advantage that even if a subsequent process, such as a high-temperature reduction process, is performed in a state where the electrolyte in the shredded material from spent batteries is volatilized, a fire may not occur, the material may maintain stability, and the subsequent process may be performed. When Equation 3 and Equation 4 are not satisfied, a fire may occur due to the electrolyte in the shredded material from spent batteries during the subsequent process, which makes it difficult to perform the process. When Equation 3 and Equation 4 are not satisfied, the sixth step, which is a high-temperature stabilization step, may be continuously performed on the shredded material from spent batteries until Equation 3 and Equation 4 are satisfied.

The seventh step of discharging the shredded material from spent batteries, having passed through the sixth step, may discharge the shredded material from spent batteries that satisfies the aforementioned conditions. The shredded material from spent batteries, having undergone the low-temperature and high-temperature stabilization steps, may be discharged for input into a subsequent process, such as a reduction process.

### [Mode for Carrying Out the Invention]

Preferred ecmbodiments and comparative examples of the present disclosure will be described below. However, the following embodiments are only preferred embodiments of the present disclosure and the present disclosure is not limited to the following embodiments.

### <Experimental Example>

### <Internal temperature of the battery according to minimum freezing time>

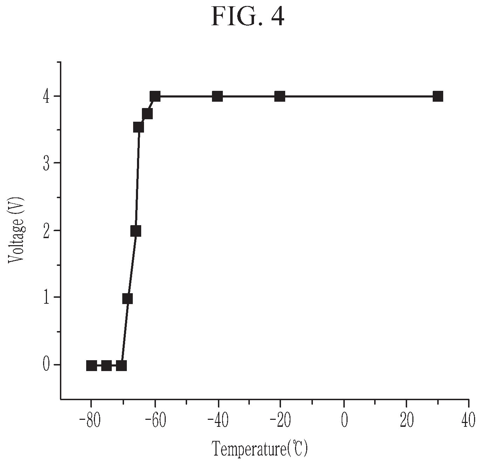

FIG. 4 shows a change in voltage of a battery according to a cooling temperature according to one embodiment of the present disclosure.

Referring to FIG. 4, when the battery is frozen to -80 °C and the battery voltage is measured, the battery pack exhibits almost the same voltage at a high temperature of about 40 °C, room temperature, and temperatures down to -60 °C; thus, it may be confirmed that battery characteristics are maintained. Subsequently, when the temperature is lowered from -60 °C to -70 °C, the voltage drops sharply, and it has been confirmed that the voltage becomes 0 V below -70 °C. As such, it has been confirmed that when the battery is frozen at -60 to - 150 °C, a short circuit does not occur.

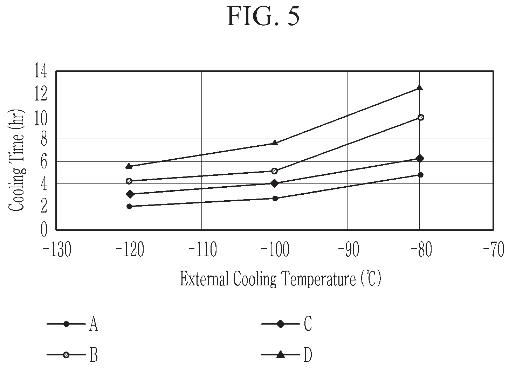

FIG. 5 is a graph showing a relationship between battery weight, external cooling temperature, and cooling time according to one embodiment of the present disclosure.

Referring to FIG. 5, it may be confirmed that the battery treatment method according to one embodiment of the present disclosure may derive a minimum cooling time for cooling the battery in the step of freezing the battery. Specifically, it may be confirmed that the minimum cooling time is related to the battery weight, the external cooling temperature, and the target temperature. Specifically, FIG. 5 illustrates the external cooling temperature and the minimum cooling time when the target temperature is set to -70 °C and the battery weights are set to 2.5 kg (A), 10 kg (B), 20 kg (C), and 50 kg (D), respectively. When the battery is cooled, it may be confirmed that the electrolyte of the battery starts cooling after a predetermined time, at which point the voltage becomes 0 V. Through this, it may be confirmed that a minimum holding time is required to sufficiently cool the inside of the battery, specifically the electrolyte, when cooling the battery.

Specifically, in a heat transfer situation for cooling where heat is dissipated to the outside, when considering the specific heat of the battery itself, it may be confirmed that the battery weight and a cooling duration are required. As such, in the present invention, a minimum time required for cooling may be identified using an external cooling temperature for refrigeration, a target temperature, and the battery weight to cool the battery.

The following Table 1 shows the minimum cooling time according to the battery weight and the external cooling temperature.

**[Table 1]**

| | Battery weight [Kg] | External cooling temperature [°C] | Target temperature [°C] | Equation 1 | Minimum cooling time [h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

As shown in Table 1, it may be confirmed that as the battery weight decreases, the minimum cooling time required for the battery to be cooled decreases. In addition, when the battery is cooled for the minimum cooling time corresponding to the value of Equation 1 derived from the relational expression based on the battery weight, external cooling temperature, and target temperature, it may be confirmed that the battery, specifically, the electrolyte of the battery, is cooled. Furthermore, when the battery is cooled for a duration equal to or greater than the value of Equation 1, no fire occurs during the battery shredding process, which is a subsequent process.

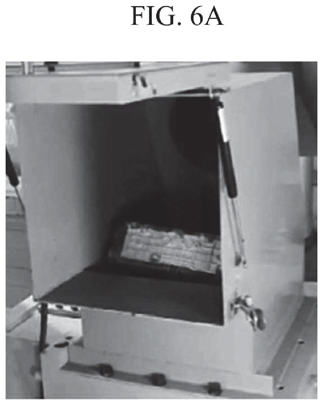

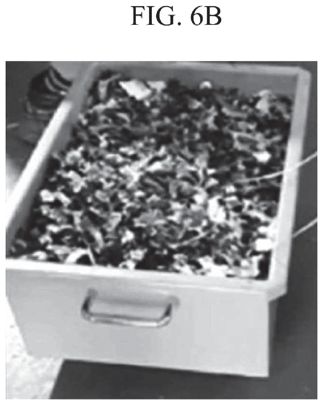

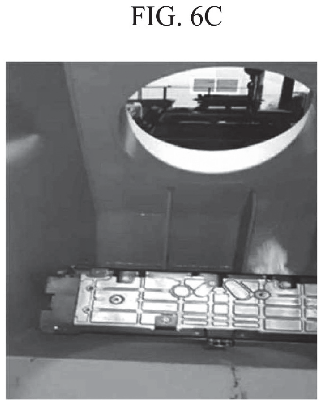

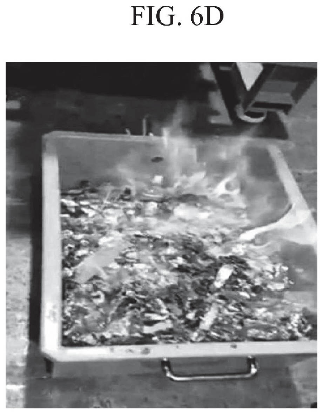

FIGS. 6a and 6b are photographs of an example according to a minimum cooling time of the present disclosure, and FIGS. 6c and 6d are photographs of a comparative example according to a minimum cooling time of the present disclosure.

Referring to FIGS. 6a and 6b, in cooling the battery, a fire occurrence state of the shredded material was tested when the battery was frozen for a time less than the necessary minimum cooling time. In the experiment, when the battery weight was 25 kg, the external cooling temperature was -95 °C, and the target freezing temperature was -70 °C, the experiment was conducted for 5 hours, which is less than the value of 7 hours calculated by the following Equation 1. <Equation 1> $minimum cooling time = A \times \left({W}^{0.33}\right)$ (A = 4 × e^{(-0.02×dT)}, W = battery weight (Kg), dT = |external cooling temperature - target temperature|, where || denotes an absolute value)

Referring to FIGS. 6c and 6d, the fire occurrence state of the shredded material was tested when the battery was frozen for a time equal to or longer than the minimum freezing time required for cooling. In the experiment, the battery weight, external cooling temperature, and minimum freezing time were the same as those shown in Table 2 below, with the minimum freezing time set to 7 hours or more.

Table 2 below compares the fire occurrence states of the Examples and Comparative Examples under the same battery weight, external cooling temperature, and minimum freezing time according to 6a to 6d. The determination of the fire occurrence state was indicated as "O" if fire occurrence was observed after shredding the battery, and "X" otherwise.

**[Table 2]**

| | Battery weight [Kg] | External cooling temperature [°C] | Target temperature [°C] | Equation 1 | Actual cooling time [h] | Fire occurrence |
|---|---|---|---|---|---|---|
| Comparative Example | 25 | - 95 | - 70 | 7.0 | 5 | O |
| Example | 25 | - 95 | - 70 | 7.0 | 7 | X |

Referring to Table 2, it may be confirmed that when the battery is cooled for a duration less than the value of Equation 1 corresponding to the minimum cooling time, the electrolyte is not cooled, which may result in a fire after the battery is shredded. As such, when the battery is cooled for at least the duration defined by the value of Equation 1 as the minimum cooling time, it may be confirmed that the shredded material may be utilized stably without the occurrence of a fire after the battery is shredded.

### <Battery shredding step - size of shredded material>

Even if a frozen battery is shredded, the possibility of a fire occurring during shredding may be low, but depending on the state of charge of the battery, the shredded material may have a potential difference within it. In the present disclosure, a standard for stabilizing the shredded material is established by measuring a temperature rise of the shredded material.

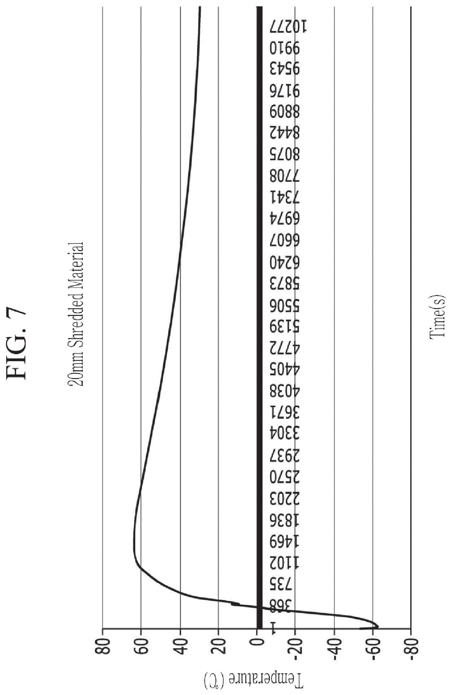

FIG. 7 is a graph showing the temperature of the shredded material over time, according to one embodiment of the present disclosure.

Referring to FIG. 7, in order to confirm the maximum ignition temperature based on a shredded material having a size of 20 mm, the temperature change over time was measured. Specifically, after shredding the battery that had undergone the freezing step, the temperature change over time was measured for a 20 mm size shredded material among the generated shredded material by leaving it in the atmosphere and using an air-based cooling method. In the case of the 20 mm size shredded material, it may be confirmed that the maximum ignition temperature is about 65 °C. It may also be confirmed that this is lower than 120 °C, which is the average vaporization temperature of the electrolyte.

The following Table 3 shows the measurement of the temperature rise according to the size of the shredded material.

**[Table 3]**

| | Average size of shredded material (mm) | | | | | |
|---|---|---|---|---|---|---|
| | 1 | 10 | 20 | 50 | 100 | 150 |
| Temperature rise [°C] | 30 | 50 | 65 | 90 | 110 | 140 |

As shown in Table 3, it may be confirmed that a difference in the re-heating temperature occurs depending on the size of the shredded material. Furthermore, it was confirmed that for stabilization temperature in process design, the average size of the shredded material must be shredded to within 100 mm in terms of the major axis, which is the longest axis among the horizontal, vertical, and height directions.

In addition, depending on the size of the shredded material, the shredded material may require time to be physically stabilized. As a method for stabilizing the shredded material, it is necessary to maintain the shredded material at a temperature lower than 120 °C for a predetermined process time, or to maintain the shredded material for a predetermined process time under a condition where an inert gas is introduced to reduce contact with oxygen in the atmosphere.

In the present disclosure, the shredded material having an average size of 20 mm was maintained at a room temperature level of 30 °C for approximately 3 hours, at which time it was confirmed that the elevated temperature of the shredded material dropped to the room temperature level.

Regarding the stabilization time, a holding time of within a few minutes may be acceptable for shredded material of 100 mm or less; however, for shredded material exceeding 100 mm, a stabilization time of at least 3 hours is required.

### <Battery shredding step - shred layer control step of the battery shred>

When shredding was performed below the minimum freezing time of the shredded material, brittle fracture of the shredded material did not occur in a cryogenic state, which resulted in the shredded material having a large size, or in the shredded material having an increased thickness due to the presence of multiple layers of the cathode current collector and the anode current collector. As the layer thickness of the shredded material increases, problems arise in that the temperature rise is significant and the time required for the temperature rise is long.

The following Table 4 shows measurement of temperature rise according to the layered structure in unit battery shreds according to one embodiment of the present disclosure using a thermal imaging camera.

Referring to Table 4 below, in the case of a layered structure, a cathode-separator-anode assembly constitutes one layer; when the shredded materials are stacked in multiple layers, they are arranged in the order of cathode-separator-anode-separator-cathode-separator-anode.... Specifically, this means that the separator structure is arranged in a multi-layered configuration, with the cathode or the anode being disposed between the separators in the spent battery. Specifically, the cathode or the anode may be disposed on at least one surface of the separator.

In Table 4 below, the average size of the shredded material was evaluated as 20 mm, and the temperature by layer of the shredded material after shredding was evaluated; furthermore, the recovery time required to rise from the freezing temperature to the maximum temperature and subsequently drop back down to 40 °C was measured.

In this case, the size of the shredded material was measured based on the major axis of the shredded material.

**[Table 4]**

| | Number of layers of layered structure [layers] | Size of shredded material [mm] | Maximum temperature [°C] | Recovery time below 40 °C [min] | Remarks |
|---|---|---|---|---|---|
| Experimental Example | 2 | 20 | 63 | 110 | Example |
| Experimental Example | 3 | 20 | 64 | 110 | Example |
| Experimental Example | 5 | 20 | 75 | 144 | Example |
| Experimental Example | 7 | 20 | 105 | 200 | Example |
| Experimental Example | 10 | 100 | Combustion | - | Comparative Example |

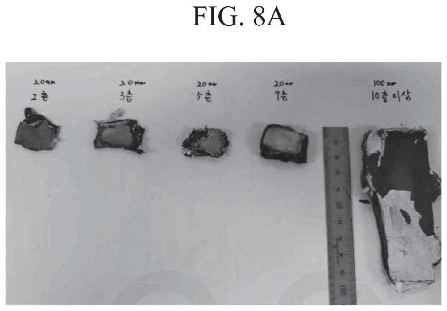

FIGS. 8a to 8c illustrate unit battery shreds according to an example and a comparative example of the present disclosure.

Referring to FIG. 8a, Examples and Comparative Examples according to the size of the shredded material and the number of layers of the layered structure of the unit battery shreds may be identified.

Referring simultaneously to FIG. 8a and Table 4, it was confirmed that when the number of layers of the layered structure is 3 or less, the temperature of the shredded material was stably maintained at 110 °C or lower, whereas when the number of layers is greater than 7, the temperature rose above 105 °C and combustion occurred due to a reaction with the electrolyte.

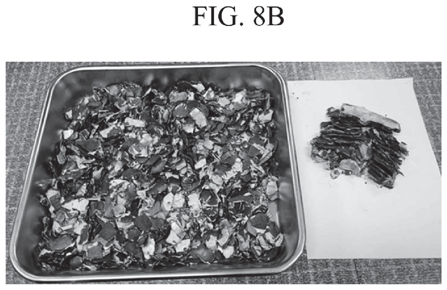

Referring to FIG. 8b, the mixing ratio according to the weight ratio of the shredded battery material may be identified. Specifically, the shredded battery material having a layered structure of 7 layers or less (left side of FIG. 8b) was mixed in an amount of 905 g, and the shredded battery material having a layered structure of more than 7 layers (right side of FIG. 8b) was mixed in an amount of 95 g.

Regarding the size of the shredded battery material, it was confirmed that in the case of a single layer, if the maximum size exceeds 100 mm, the maximum temperature may rise to a temperature higher than 105 °C, and the possibility of fire occurrence is high. In addition, it was confirmed that the possibility of fire occurrence increases when the number of layers of the layered structure is more than 7, even at a size of 100 mm or less.

Table 5 below shows the fire occurrence probability according to the weight percentage ratio of shredded material having a layered structure of more than 7 layers in the battery shredded material of the present disclosure.

**[Table 5]**

| | Weight ratio exceeding 7 layers [%] | Number of experiments [times] | Fire occurrence frequency [times] | Whether or not fire occurs | Remarks |
|---|---|---|---|---|---|
| Experimental Example | Less than 2 | 10 | 0 | X | - |
| Experimental Example | 2-5 | 10 | 0 | X | - |
| Experimental Example | 6-10 | 10 | 1 | Δ | Smoke generation |
| Experimental Example | More than 10 | 3 | 3 | O | Fire occurrence |

Referring to Table 5, as a result of measuring the frequency of fire occurrences multiple times in 1 kg cell units of the shredded material, it was confirmed that fire occurrence was negligible when the weight ratio of the shredded material having a layered structure with more than 7 layers was 10% or less based on the total weight ratio. In addition, it was confirmed that when the weight ratio of the shredded material having a layered structure with more than 7 layers exceeded 10% based on the total weight ratio, a fire occurred in all three experiments. In this regard, it was confirmed that the ignition position of the fire originated from the thick shredded material having 7 layers or more.

As such, it was confirmed that fire of the shredded material may be prevented when the weight ratio of the shredded material having a layered structure of more than 7 layers is 10% or less, specifically 5% or less, based on the total weight of the shredded material; and it was confirmed that the fire occurrence frequency increases when the shredded material having a layered structure of more than 7 layers or the shredded material having a size larger than 100 mm is included in an amount of more than 10% based on the total weight of the shredded battery material.

In addition, Table 6 below shows the results of confirming whether smoke is generated according to the ratio of combustion traces on the surface of the shredded material, according to one embodiment of the present disclosure.

**[Table 6]**

| | Combustion area/Normal area ratio [%] | Smoke generation | Remarks |
|---|---|---|---|
| Experimental Example | 10 | X | Example |
| Experimental Example | 20 | X | Example |
| Experimental Example | 30 | X | Example |
| Experimental Example | More than 30 | O | Comparative Example |

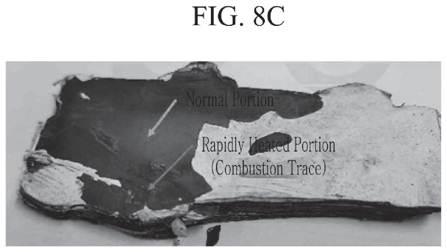

FIG. 8c illustrates a combusted portion and a normal portion of a surface of unit battery shreds according to one embodiment of the present disclosure.

Referring to FIG. 8c, on the surface of unit battery shreds, a normal portion without combustion traces due to high temperature and a surface of shredded material with combustion traces due to high temperature may be identified. The combusted portion is a portion with combustion traces due to high temperature, and more specifically, it may be a rapidly heated portion, and it refers to a region having a darker color compared to the normal portion which is an unburned portion. Most of the combusted portion appears as having an edge that is combusted.

Referring to FIG. 8c and Table 6, it was confirmed that when the unit battery shreds have substantially no combustion traces due to high temperature on their surfaces, or when the combustion traces on the surface area are 30% or less, combustion does not occur upon evaluation of smoke generation. When the combustion traces on the surface area exceed 30%, it was confirmed that a fire accompanied by smoke occurred.

### <Battery stabilization step: shredded material temperature trend according to spent battery SOC conditions>

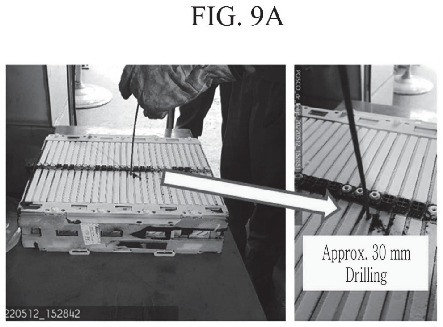

FIGS. 9a to 9c are photographs showing a process of measuring temperature of a spent battery and a temperature trend of shredded material according to SOC conditions.

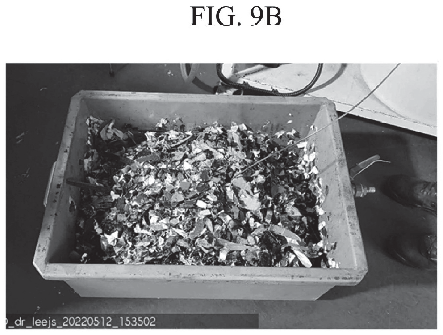

FIGS. 9a and 9b show temperatures measured before and after battery shredding, and FIG. 8c shows a temperature trend of shredded material according to the SOC condition of a spent battery. Referring to FIG. 9a, in order to measure the temperature before shredding the spent battery, a hole was drilled into the center of the battery module to a depth of approximately 30 mm, and a thermocouple (TC) was installed to measure the temperature. Referring to FIG. 9b, in order to measure the temperature of the shredded material after shredding the spent battery, a thermocouple (TC) was installed in the center of the shredded material to perform the measurement.

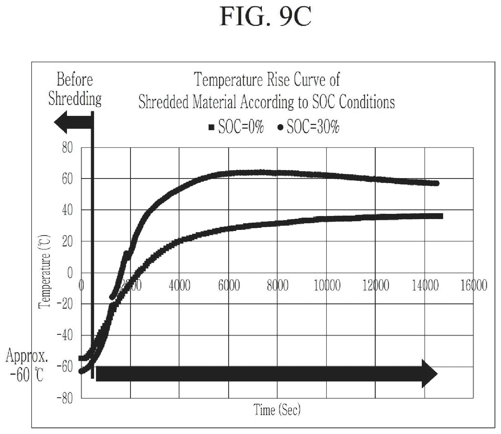

Referring to FIG. 9c, temperature patterns measured at SoC conditions of 0% and 30% of the battery are shown. SoC is an abbreviation for 'State of Charge,' which refers to the charge state of a lithium-ion battery. Specifically, to indicate the residual capacity of a battery, the ratio of the currently usable battery capacity to the total capacity is expressed as a percentage (%). This graph illustrates measurements obtained by installing a thermocouple (TC) in the center of the shredded material to measure the internal temperature thereof after cryogenic shredding of the battery.

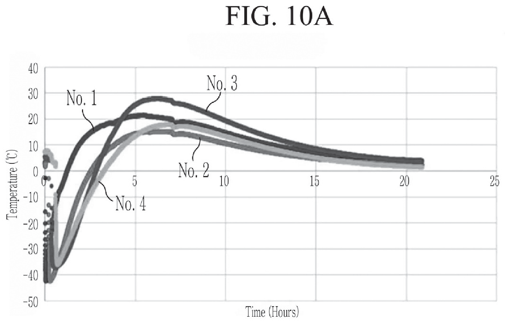

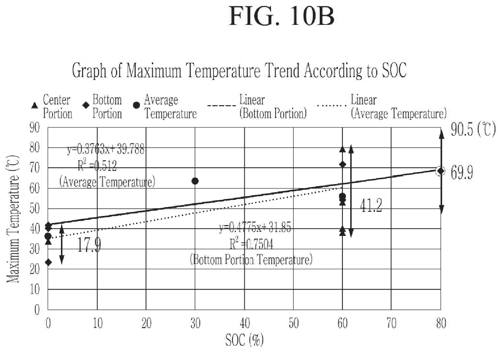

FIG. 10a shows a temperature trend of shredded material over time, and FIG. 10b is a graph showing a temperature rise trend of shredded material according to the SoC % condition of a battery.

Referring to FIGS. 10a and 10b, it may be confirmed that the temperature rises to 10 degrees or higher over time and then decreases. In addition, it was confirmed that the battery with an SOC of 0 % was shredded in a frozen state, with the initial temperature starting at about -60 °C and rising to a maximum temperature of about 30 °C, and the battery with an SOC of 30 % rose to a maximum temperature of 60 °C. Through this, it is necessary to identify in advance the SOC state of the shredded material undergoing low-temperature stabilization treatment, which proceeds with self-heating during the stabilization treatment. Specifically, regarding the maximum temperature trend according to SOC conditions, it was confirmed that a fire occurs during stabilization treatment when the SOC is 80 % or higher.

### <Battery stabilization step>

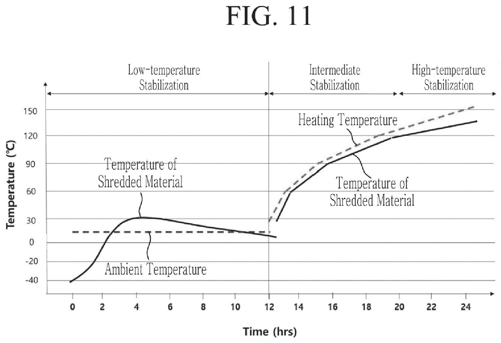

FIG. 11 is a graph showing the temperature of the shredded battery material over time during a low-temperature stabilization step, an intermediate step, and a high-temperature stabilization step according to an embodiment of the present disclosure.

FIG. 11 is a graph showing the temperature of shredded material from spent batteries when a total stabilization treatment of up to 24 hours was continuously performed by conducting low-temperature stabilization for up to 12 hours and intermediate and high-temperature stabilization for up to 12 hours. It was confirmed that by performing the low-temperature stabilization process followed by the intermediate and high-temperature stabilization steps, the temperature of the battery may be prevented from rapidly increasing, thereby obtaining a stabilized battery.

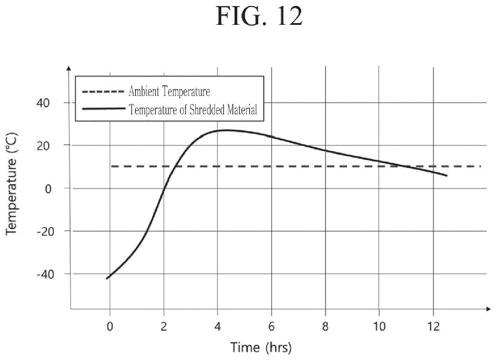

FIG. 12 illustrates a temperature change of a transport box containing shredded material having an SOC of 30% or less. Specifically, the ambient temperature in FIG. 12 refers to the temperature of the transport box. During the low-temperature stabilization step, it may be confirmed that the temperature inside the transport box rises due to the self-heating of the battery shredded material during transport. In this regard, it may be confirmed that the temperature of the battery shredded material is preferably controlled to be 30 °C or less during the low-temperature stabilization step.

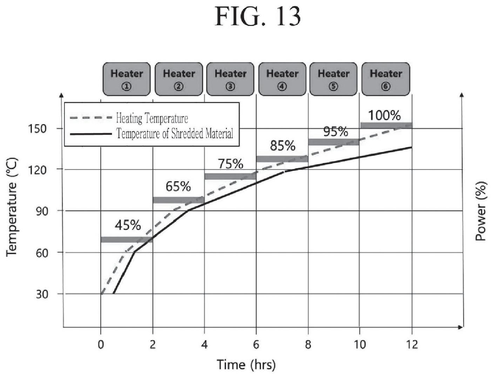

FIG. 13 illustrates the temperature change of the shredded material when the heating temperature for each section for the heat treatment of the high-temperature stabilization step is controlled.

Referring to FIG. 13, the shredded material that has undergone the low-temperature stabilization step undergoes a high-temperature stabilization treatment step. In the high-temperature reduction treatment step, for continuous heat treatment, the temperature is controlled by adjusting the power (%) of a heating device for each section (6 sections), thereby increasing the temperature of the shredded material, and accordingly, the electrolyte in the shredded material is removed.

### <Heating pattern of stabilized shredded material>

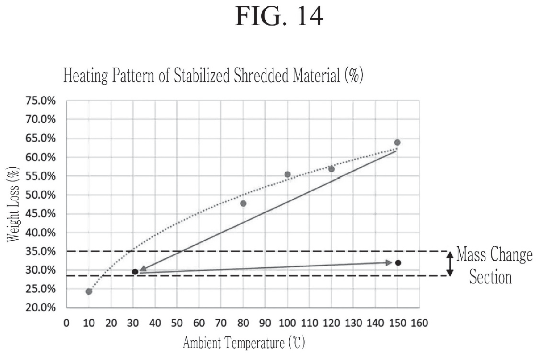

FIG. 14 shows the weight loss ratio (%) of electrolyte in the shredded material according to a heat treatment temperature of 150 °C after high-temperature stabilization treatment of the shredded material.

Referring to FIG. 14, the weight loss ratio (%) of the electrolyte contained in the total shredded material decreases according to the temperature condition as the heat treatment temperature of the shredded material is varied during high-temperature stabilization treatment of the battery. Specifically, when the shredded material of the battery subjected to the high-temperature stabilization treatment was heated up to 150 °C, it was confirmed that the amount of the electrolyte decreased to about 65 weight % after the high-temperature stabilization treatment, based on a total amount of the electrolyte contained in the shredded material of the battery as 100 weight %. The shredded material of the battery subjected to the high-temperature stabilization treatment is a stabilized lithium-ion shredded material that may allow for safely performing battery processing operations in subsequent processes such as primary sorting or dry high-temperature treatment.

Therefore, as a major feature of the shredded material stabilized after cryogenic shredding, it was confirmed that the shredded material subjected to stabilization at a low temperature may additionally undergo high-temperature stabilization treatment, such that when the battery shredded material for which stabilization treatment is completed is heated at 150 °C, the mass change before and after heating is minimal.

### <Tap density change amount>

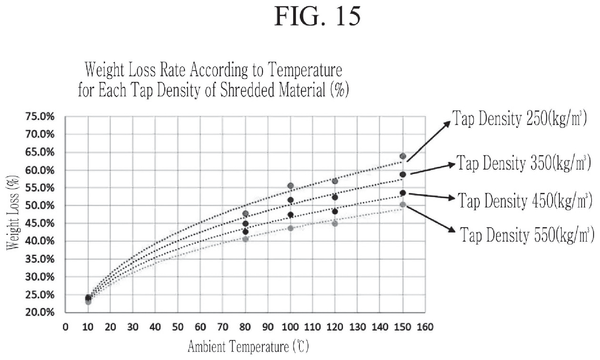

FIG. 15 shows temperature and weight loss according to tap density of shredded battery material.

Referring to FIG. 15, the weight loss of the shredded battery material when subjected to the battery stabilization step of the present invention is shown for cases where the tap densities of the shredded battery material before performing the low-temperature stabilization are 250, 350, 450, and 550 kg/m³, respectively. It was confirmed that as the tap density of the shredded battery material sequentially decreases from 550 kg/m3 to 250 kg/m³, gaps are formed in the shredded battery material, which facilitates vaporization of the electrolyte and increases the weight loss relative to the weight (100%) of the electrolyte inside the battery.

### <Evaluation Example>: Data according to low-temperature stabilization and high-temperature stabilization conditions

Table 7 below shows the weight loss and tap density of shredded material, obtained when unit battery shreds of a layered-structure battery-having a 7-layer stacked structure and a size of 20 mm based on the major axis among the width, length, and height directions-are subjected to the low-temperature stabilization treatment and high-temperature stabilization treatment conditions described in Table 7 below.

In this case, a multi-stage intermediate stabilization treatment step was performed between the low-temperature stabilization treatment step and the high-temperature stabilization treatment step, wherein the intermediate stabilization treatment step comprised performing heat treatment sequentially at temperature ranges of 30 to 60 °C, 60 to 90 °C, and 90 to 120 °C, and the aforementioned high-temperature heat treatment time was 12 hours, including all of the intermediate stabilization treatment times.

Weight loss of the shredded material after the low-temperature stabilization treatment step and the high-temperature stabilization treatment step was measured with a weight measuring device.

The tap density was measured by shredding a commercialized battery module of about 30 kg (consisting of 30 cells) with a shredder, placing the shredded material into a stabilization volume case (0.44 m in length × 0.7 m in width × 0.5 m in height), and mechanically tapping the case to obtain an apparent density. Specifically, the density (ρ= M/V) is obtained by dividing the battery weight (M, kg) by the internal volume of the case (V, m³).

The weight loss ratio of the shredded material after reheating was determined by reheating unit battery shreds, which had undergone a high-temperature stabilization treatment step, to 150 °C and measuring the weight loss ratio before and after the reheating.

Stability was described as X if fire occurred during the battery shredding process, and as O if no fire occurred.

**[Table 7]**

| | Tap density [kg/m3] | Low-temperature stabilization treatment step condition | | Weight loss of shredded material after low-temperature stabilization treatment step [%] | High-temperature stabilization treatment step condition | | Weight loss of shredded material after high-temperature stabilization treatment step [%] | Weight loss ratio after reheating of shredded material [%] | Stability |
|---|---|---|---|---|---|---|---|---|---|
| | | Temperature [°C] | Time [h] | | Temperature [°C] | Time [h] | | | |
| Example | 250 | 10 | 6 | 3.7 | 150 | 12 | 9.5 | 0.7 | O |
| Example | 250 | 10 | 9 | 3.9 | 140 | 12 | 9.3 | 0.5 | O |
| Example | 250 | 20 | 12 | 4.1 | 130 | 6 | 8.5 | 0.9 | O |
| Example | 250 | 25 | 12 | 4.4 | 150 | 12 | 9.6 | 1.0 | O |
| Comparative Example | 250 | 0 | 24 | 2.5 | 100 | 5 | 6.4 | 3.1 | X |
| Comparative Example | 250 | 40 | 3 | 3.1 | 200 | 5 | 7.3 | 2.2 | X |

Referring to Table 7, the low-temperature stabilization treatment of the Examples was performed at 10 to 25 °C for 6 to 12 hours, and the high-temperature stabilization treatment was performed at 130 to 150 °C for 6 to 12 hours. At this time, upon examining the weight loss after reheating the shredded material, it may be confirmed that it is 1.0 % or less, and it was confirmed that by satisfying the weight loss after reheating the shredded material of 1.0 % or less, a significant amount of electrolyte is reduced, thereby ensuring stability in the subsequent process. On the other hand, when the low-temperature stabilization treatment process is not performed or is performed at a high temperature such as 40 °C, there is a problem of a battery fire hazard, and it was confirmed that the weight loss of the obtained battery shredded material is low. In addition, when the low-temperature stabilization treatment is not sufficiently performed and the high-temperature stabilization treatment is performed, a low-temperature volatile electrolyte is excessively generated during high-temperature treatment, which further increases the risk of fire, and there is a problem that the electrolyte reduction is not sufficiently achieved compared to a reference time.

### <Evaluation Example>: Data according to spacing between hot air inlets and spacing between sealing portions in a sagger

Table 8 below shows the time to reach the target temperature when the spacing between the hot air inlets in the sagger was varied and when the spacing between the sealing portion and the mesh portion was varied.

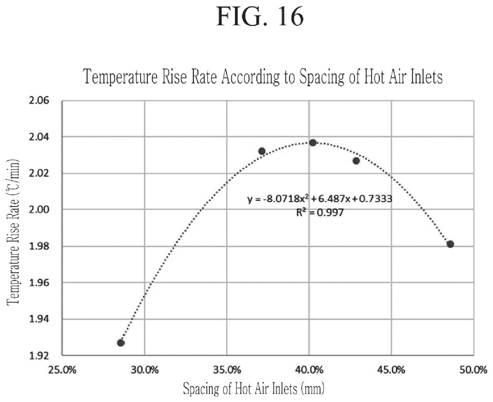

FIG. 16 shows a graph of heating rate according to spacing between hot air inlets.

Referring to FIG. 16, it may be confirmed that when the spacing between the hot air inlets satisfies 35 to 45.0% based on 100% of the horizontal length of the sagger, the target temperature is reached quickly with a heating rate per minute of 2.0 °C/min or more. Through this, it may be confirmed that process efficiency is excellent when the aforementioned spacing of the hot air inlets is maintained.

FIG. 16 shows a temperature graph over time according to spacing between hot air inlets and control of sealing portion spacing.

**[Table 8]**

| Case | Horizontal (major axis) length of sagger [mm] | Spacing between hot air inlets [mm] | Vertical (height) length of sagger [mm] | Height of the sealing portion [mm] | Time to reach 120 °C | |
|---|---|---|---|---|---|---|
| | | | | | seconds (sec) | minutes (min) |
| Case 01 | 710 | 300 | 500 | 40 | 3,552 | 59.2 |
| Case 02 | 710 | 300 | 500 | 170 | 3,326 | 55.43 |
| Case 03 | 710 | 300 | 500 | 323.5 | 1,997 | 33.17 |
| Case 04 | 710 | 200 | 500 | 40 | 3,736 | 62.27 |
| Case 05 | 710 | 340 | 500 | 40 | 3,634 | 60.57 |

Referring to Table 8 and FIG. 16, based on Case 01, it may be confirmed that the reaching time of Case 02 decreased by about 6 %, and that of Case 03 decreased by about 44 %. Thus, the time taken to reach the target temperature range of the sagger may be minimized by the height of the sealing portion satisfying the appropriate height range. In addition, looking at Case 04 and Case 05, it may be confirmed that the time taken to reach the target temperature range of the sagger increased by about 5 % and 2 %, respectively, based on Case 01. Accordingly, the time taken to reach the target temperature range of the sagger may be minimized by also satisfying the appropriate range of the spacing between the hot air inlets.

Although preferred embodiments have been described in detail above, the scope of the present disclosure is not limited thereto, and various modifications and improvements thereto by those skilled in the art using the basic concepts defined in the following claims also fall within the scope of the present disclosure.

## Claims

1. A battery stabilization apparatus comprising:
an input unit for inputting a sagger into which shredded material from spent batteries is input;
a conveying unit for conveying the sagger into which the shredded material from spent batteries is input;
a first stabilization unit for performing stabilization of the shredded material from spent batteries at a temperature of 30 °C or less;
a second stabilization unit for performing stabilization of the shredded material from spent batteries having passed through the first stabilization unit at a temperature of 30 to 150 °C; and
a discharge unit for discharging the stabilized shredded material from spent batteries,
wherein the sagger comprises a hot air inlet for supplying heat to the shredded material from spent batteries.

2. The battery stabilization apparatus of claim 1, wherein the first stabilization unit comprises a compressor.

3. The battery stabilization apparatus of claim 1, comprising at least one weight and temperature measurement unit for measuring the weight of the shredded material from spent batteries.

4. The battery stabilization apparatus of claim 3, wherein the weight and temperature measurement unit comprises:
a first weight and temperature measurement unit disposed between the inlet and the first stabilization unit;
a second weight and temperature measurement unit disposed between the first stabilization unit and the second stabilization unit; and
a third weight and temperature measurement unit disposed between the second stabilization unit and the discharge unit.

5. The battery stabilization apparatus of claim 4, wherein the second stabilization unit comprises an intermediate stabilization unit and a high-temperature stabilization unit,
the intermediate stabilization unit heats the shredded material from spent batteries in a range of 30 to 120 °C, and
the high-temperature stabilization unit heats the shredded material from spent batteries in a range of 120 to 150 °C.

6. The battery stabilization apparatus of claim 1, wherein the hot air inlet is disposed in at least a portion of the sagger.

7. The battery stabilization apparatus of claim 1, wherein the hot air inlet is formed into a shape of a cylinder, a triangular prism, a square prism, or a polygonal prism, and
the hot air inlet dissipates heat through an outer peripheral surface of the shape.

8. The battery stabilization apparatus of claim 6, comprising a plurality of the hot air inlets,
wherein a spacing between the plurality of hot air inlets is 35 to 45 % based on a horizontal length of the sagger.

9. The battery stabilization apparatus of claim 1, wherein the height of the hot air inlet is 25% to 50% of the height of the sagger.

10. The battery stabilization apparatus of claim 1, wherein the height of the hot air inlet is 25% to 50% of the height of the sagger.

11. The battery stabilization apparatus of claim 1, wherein the sagger has a structure with an open upper surface.

12. The battery stabilization apparatus of claim 1, wherein the sagger comprises a housing surrounding a side surface of the sagger, and
wherein the battery stabilizer further comprises a mesh portion and a sealing portion disposed below the mesh portion.

13. A battery stabilization treatment system comprising:
a first step of controlling a tap density of shredded material of spent batteries;
a second step of measuring a first weight, which is an initial weight, and a first temperature, which is an initial temperature, of the shredded material of spent batteries;
a third step of stabilizing the shredded material of spent batteries at a temperature of 30 °C or less;
a fourth step of measuring a second weight and a second temperature of the shredded material of spent batteries that has passed through the third step;
a fifth step of stabilizing the shredded material of spent batteries that has passed through the fourth step at a temperature of 30 to 150 °C;
a sixth step of measuring a third weight and a third temperature of the shredded material of spent batteries that has passed through the fifth step; and
a seventh step of discharging the shredded material of spent batteries that has passed through the sixth step.

14. The battery stabilization treatment system of claim 13, wherein the first step comprises controlling the tap density of the shredded material from spent batteries to a range of 200 to 1,400 kg/m³.

15. The battery stabilization treatment system of claim 13, wherein the fifth step is performed when the first weight and the first temperature of the shredded material from spent batteries measured in the second step and the second weight and the second temperature of the shredded material from spent batteries measured in the fourth step satisfy the following Equation 1 and Equation 2. <Equation 1> $Second weight - First weight \leq 25 %$ <Equation 2> $Second temperature - First temperature \leq 25 ° C$

16. The battery stabilization treatment system of claim 13, wherein the seventh step is performed when the second weight and the second temperature of the shredded material from spent batteries measured in the fourth step and the third weight and the third temperature of the shredded material from spent batteries measured in the sixth step satisfy the following Equation 3 and Equation 4. <Equation 3> $Third weight - Second weight \leq 10 %$ <Equation 4> $Third temperature - Second temperature \leq 25 ° C$

17. The battery stabilization treatment system of claim 13, wherein the fifth step is performed by a multi-stage heat treatment, and
the multi-stage heat treatment is performed sequentially at temperatures of 30 to 120 °C and 120 to 150 °C.

18. The battery stabilization treatment system of claim 13, further comprising, before the first step of controlling a tap density of the shredded material from spent batteries, a step of controlling unit shreds of spent batteries constituting the shredded material from spent batteries to satisfy the following Condition 1 and Condition 2.
<Condition 1> The layered structure is a stacked structure of 1 to 7 layers.
<Condition 2> The size of the unit shredded spent battery material is 100 mm or less based on a major axis, which is the longest axis among horizontal, vertical, and height directions.

19. The battery treatment system of claim 13, further comprising, before the first step, a step of freezing the shredded material from spent batteries,
wherein the freezing step is carried out by cooling to a temperature ranging from -150 °C to -20 °C.
